# FASCICULE DE BREVET EUROPEEN

(11) **EP 2 731 084 B1**
(45) Date de publication et mention de la délivrance du brevet: **26.02.2020**
(21) Numéro de dépôt: 13192518.2
(22) Date de dépôt: 12.11.2013
(51) Int. Cl.: G06T 19/00, G06T 17/05

(54) **Procédé d'augmentation de la réalité**
Verfahren zur Erweiterten Realität (augmented reality)
Method for Augmented Reality

(30) Priorité: 13.11.2012 FR 1260790
(43) Date de publication de la demande: 14.05.2014
(73) Titulaire: Orange, 75015 Paris (FR)
(72) Inventeur: Mit, Frédéric, 75018 PARIS (FR)
(74) Mandataire: Regimbeau

(56) Documents cités:
- GABRIEL TAKACS ET AL: "3D mobile augmented reality in urban scenes", MULTIMEDIA AND EXPO (ICME), 2011 IEEE INTERNATIONAL CONFERENCE ON, IEEE, 11 juillet 2011 (2011-07-11), pages 1-4, XP031964779, DOI: 10.1109/ICME.2011.6012101 ISBN: 978-1-61284-348-3
- BELL B ET AL: "View management for virtual and augmented reality", UIST 01. PROCEEDINGS OF THE 14TH. ANNUAL ACM SYMPOSIUM ON USER INTERFACE SOFTWARE AND TECHNOLOGY. ORLANDO, FL, NOV. 11 - 14, 2001; [ACM SYMPOSIUM ON USER INTERFACE SOFTWARE AND TECHNOLOGY], ACM, NEW YORK, NY , US, 11 novembre 2001 (2001-11-11), pages 101-110, XP002655107, ISBN: 978-1-58113-438-4 [extrait le 2001-11-11]
- FURMANSKI C ET AL: "Augmented-reality visualizations guided by cognition:perceptual heuristics for combining visible and obscured information", PROCEEDINGS / INTERNATIONAL SYMPOSIUM ON MIXED AND AUGMENTED RALITY : ISMAR 2002 ; SEPTEMBER 30 - OCTOBER 1,2002, DARMSTADT, GERMANY, IEEEE COMPUTER SOCIETY, LOS ALAMITOS, CALIF. [U.A.], 30 septembre 2002 (2002-09-30), pages 215-320, XP010620958, ISBN: 978-0-7695-1781-0
- Stefan Maass ET AL: "Dynamic Annotation of Interactive Environments using Object-Integrated Billboards", WSCG'2006, 30 janvier 2006 (2006-01-30), pages 1-8, XP055071946, Extrait de l'Internet: URL:http://wscg.zcu.cz/wscg2006/Papers_200 6/Full/A79-full.pdf [extrait le 2013-07-18]

## Description

### DOMAINE TECHNIQUE GENERAL

La présente invention concerne le domaine de la réalité augmentée.

Plus précisément, elle concerne un procédé de génération d'une image enrichie à partir d'une image d'une scène.

### ETAT DE L'ART

La réalité augmentée (RA) est une technologie permettant de compléter en temps réel un aperçu du monde tel que nous le percevons par des éléments virtuels. Elle s'applique aussi bien à la perception visuelle (superposition d'image virtuelle aux images réelles) qu'aux perceptions proprioceptives comme les perceptions tactiles ou auditives.

Dans sa composante « visuelle », la réalité augmentée consiste à incruster de façon réaliste des images de synthèse dans une séquence d'images le plus souvent filmée en direct, par exemple avec une caméra d'un smartphone.

L'objectif est le plus souvent de fournir à l'utilisateur des informations sur son environnement, à la manière de ce que permet un affichage tête-haute (« Head-Up display »).

Les possibilités sont alors multiples : la réalité augmentée peut aider un passant à trouver un chemin, un touriste à découvrir des monuments, un consommateur à choisir des magasins, etc. Par ailleurs, la réalité augmentée peut tout simplement être un moyen de divertissement.

Les images de synthèse sont générées par ordinateur (par exemple le processeur du smartphone) à partir de données diverses et synchronisées avec la vue « réelle » par analyse de la séquence d'images. Par exemple, en orientant le smartphone vers un immeuble, il est possible d'identifier l'emplacement géographique et l'orientation de la caméra grâce à un GPS et à une boussole intégrés.

Dans de nombreuses applications, les images de synthèse ajoutées à la scène réelle consistent en des panneaux textuels ou des pictogrammes, informant l'utilisateur sur des éléments particuliers environnants, qu'ils soient des monuments, des magasins, des arrêts de bus, des carrefours, etc. Le « panneau » est incrusté dans l'image comme s'il était présent au niveau de l'élément particulier associé. On peut citer l'exemple d'une application immobilière de réalité augmentée qui affiche le prix du mètre carré sur l'immeuble observé.

Le document « 3D mobile augmented reality in urban scenes » décrit un exemple d'un tel procédé de réalité augmentée qui comprend l'intégration, dans une image d'une scène tridimensionnelle acquise par des moyens d'acquisition optique depuis une position spatiale de référence, d'objets graphiques associés à des positions spatiales dans la scène.

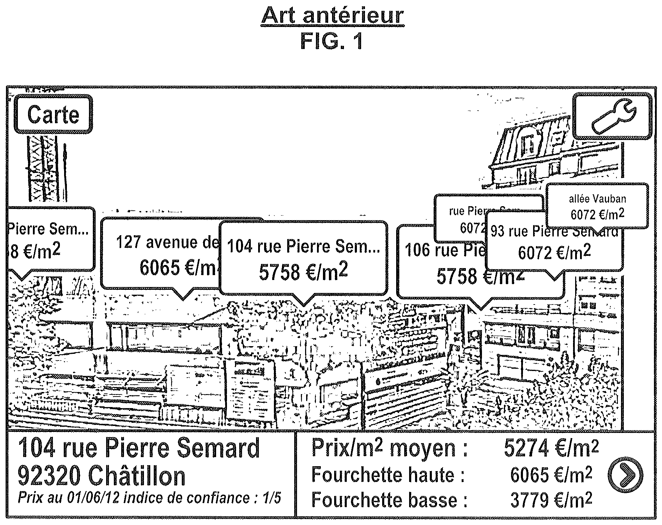

Toutefois, on constate aujourd'hui que les technologies de réalité virtuelle sont perfectibles. On constate sur la figure 1, qui reprend l'exemple de l'application immobilière, que certaines vues s'avèrent entraîner un affichage très confus et déroutant pour l'utilisateur.

L'incrustation des images de synthèse altère ici la réalité plus qu'elle ne l'améliore, et l'expérience de l'utilisateur n'est plus satisfaisante.

Il serait par conséquent souhaitable d'améliorer les procédés existants d'augmentation de la réalité.

### PRESENTATION DE L'INVENTION

La présente invention est définie par les revendications indépendantes et se rapporte ainsi selon un premier aspect à un procédé de génération d'une image enrichie à partir d'une image d'une scène tridimensionnelle acquise par des moyens d'acquisition optique depuis une position spatiale de référence, le procédé comprenant l'intégration dans l'image, par des moyens de traitement de données, d'au moins un objet graphique associé à une position spatiale de la scène ; le procédé étant caractérisé en ce que les moyens de traitement de données sont configurés pour :
(a) déterminer pour chaque objet graphique si la position spatiale associée est visible dans la scène par un utilisateur desdits moyens d'acquisition optique depuis ladite position spatiale de référence ;
(b) intégrer chaque objet graphique dans l'image en fonction du résultat de la détermination de visibilité.

Le fait d'enrichir l'image en n'affichant que les objets graphiques qui seraient visibles dans le monde réel (et non ceux que l'on voit « à travers » des obstacles, ou en les affichant différemment) rend l'affichage plus naturel et renforce son réalisme.

La détermination de visibilité de l'étape (a) consiste pour chaque objet graphique en un test d'intersection entre :
- un segment ayant pour extrémités la position spatiale associée à l'objet graphique et ladite position spatiale de référence ; et
- une modélisation tridimensionnelle de la scène.

Cette méthode de test permet de déterminer sûrement et facilement la visibilité ou non d'un objet graphique.

L'intégration de chaque objet graphique dans l'image comprend un ajustement de la taille de l'objet graphique en fonction de la position spatiale associée à l'objet graphique (l'ajustement de la taille renseigne l'utilisateur sur la position spatiale associée à l'objet graphique) ; ledit ajustement de la taille de chaque objet graphique est proportionnel à la distance entre la position spatiale associée à l'objet virtuel et ladite position spatiale de référence (cette homothétie donne aux objets graphiques un comportement similaire à celui d'une vraie enseigne, pour plus de réalisme).

Selon d'autres caractéristiques avantageuses et non limitatives :
- le procédé comprend la mise en oeuvre par les moyens de traitement de données d'une étape préalable de génération de chaque d'objet graphique, chaque objet graphique généré étant intégré dans l'image à l'étape (b) seulement s'il est déterminé visible.
   Cela permet de préparer tous les objets graphiques potentiellement visibles pour l'utilisateur, et les afficher ou non au gré de ses déplacements (et donc de l'évolution de son axe de vision).
- les moyens de traitement de données sont en connexion avec un serveur via un réseau, le serveur étant apte à fournir ladite modélisation tridimensionnelle de la scène (ce mode connecté utilise une modélisation tridimensionnelle chargée au cas par cas pour limiter les ressources nécessaires) ;
- le procédé comprend la mise en oeuvre par des moyens de géolocalisation connectés aux moyens de traitement de données d'une étape préalable de localisation et d'orientation de ladite scène tridimensionnelle (la géolocalisation permet de faciliter la gestion de la réalité augmentée) ;
- le procédé comprend l'envoi au serveur d'une requête des données de ladite modélisation tridimensionnelle de la scène en fonction des données de localisation et d'orientation de ladite scène tridimensionnelle obtenues (la combinaison de la géolocalisation et de l'utilisation d'un serveur fournissant les données de modélisation tridimensionnelle permet un fonctionnement dynamique optimal) ;
- les moyens de traitement de données et les moyens d'acquisition optique sont ceux d'un terminal mobile, le terminal mobile comprenant en outre des moyens d'affichage de ladite image enrichie.

Selon un deuxième aspect, l'invention concerne un terminal mobile comprenant des moyens d'acquisition optique configurés pour acquérir au moins une image d'une scène tridimensionnelle depuis une position spatiale de référence de la scène, et des moyens de traitement de données configurés pour intégrer dans l'image au moins un objet graphique associé à une position spatiale de la scène ;
le terminal mobile étant caractérisé en ce que les moyens de traitement de données sont en outre configurés pour déterminer pour chaque objet graphique si la position spatiale associée est visible dans la scène par un utilisateur desdits moyens d'acquisition optique depuis ladite position spatiale de référence, et intégrer chaque objet graphique dans l'image en fonction du résultat de la détermination de visibilité.

Un terminal mobile est en effet l'outil optimal pour mettre en œuvre un procédé d'enrichissement de la réalité, dans la mesure où il combine de façon portable des moyens de traitement de données et des moyens d'acquisition optique.

Selon d'autres caractéristiques avantageuses et non limitatives, le terminal mobile comprend en outre des moyens de géolocalisation et des moyens de connexion via à un réseau à un serveur sur des moyens de stockage de données duquel sont stockées des données relatives à une modélisation tridimensionnelle de la scène. La plupart des terminaux mobiles disposent en effet d'une connexion à internet qui permet de transmettre au serveur les données de géolocalisation et de récupérer en retour de requête les données de modélisation tridimensionnelle pour la mise en oeuvre du procédé.

Selon un troisième et un quatrième aspect, l'invention concerne respectivement un produit programme d'ordinateur comprenant des instructions de code pour l'exécution d'un procédé de génération d'une image enrichie à partir d'une image d'une scène tridimensionnelle acquise par des moyens d'acquisition optique selon le premier aspect de l'invention ; et un moyen de stockage lisible par un équipement informatique sur lequel un produit programme d'ordinateur comprend des instructions de code pour l'exécution d'un procédé de génération d'une image enrichie à partir d'une image d'une scène tridimensionnelle acquise par des moyens d'acquisition optique selon le premier aspect de l'invention.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 précédemment décrite représente un affichage en réalité augmentée conforme à l'art antérieur ;
- la figure 2 est un schéma d'une architecture pour la mise en oeuvre d'un mode de réalisation préféré du procédé selon l'invention ;
- les figures 3a-3b sont deux captures d'écran illustrant la mise en oeuvre d'un mode de réalisation préféré du procédé selon l'invention.

### DESCRIPTION DETAILLEE

### Principe

Le procédé selon l'invention est un procédé de génération d'une image enrichie à partir d'une image I d'une scène tridimensionnelle S acquise par des moyens d'acquisition optique 12 depuis une position spatiale de référence de la scène S. Il commence donc par une étape d'acquisition d'au moins une image I d'une scène tridimensionnelle S par les moyens d'acquisition optique 12 depuis une position spatiale de référence de la scène S.

Comme il sera expliqué plus loin, le présent procédé est tout particulièrement destiné à être mis en oeuvre par un terminal mobile (un smartphone, une tablette tactile, etc.) qui incorpore les moyens d'acquisition optique 12, notamment sous la forme d'une petite caméra.

Dans la figure 1 est représenté un terminal mobile 1 comprenant une caméra dorsale 12.

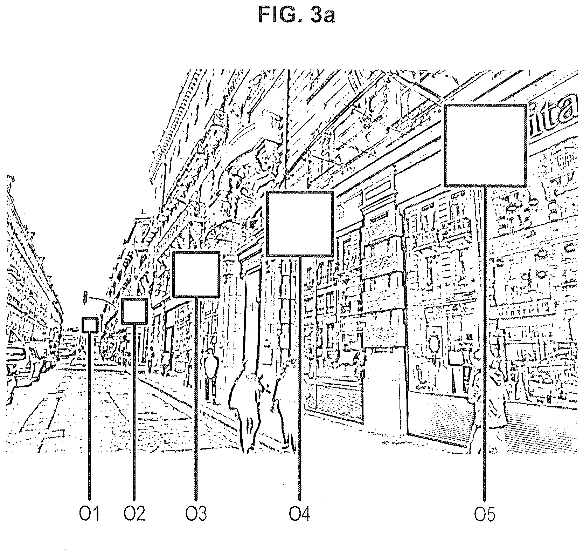

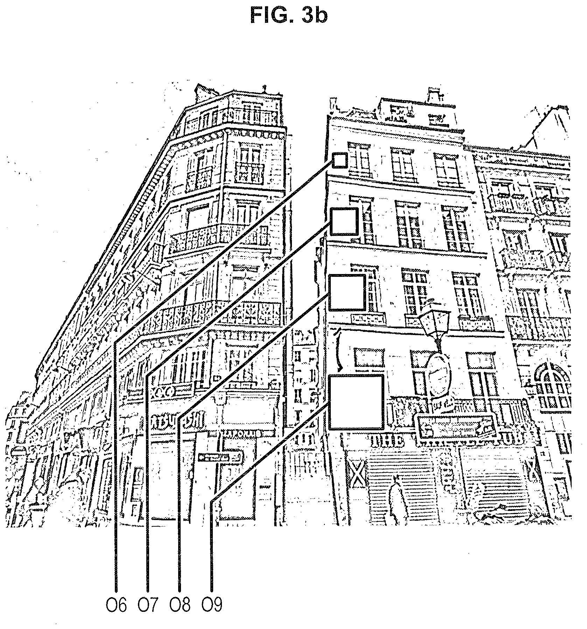

Un terminal mobile 1 permet en effet facilement l'acquisition d'une image I n'importe où, la scène tridimensionnelle S mentionnée étant le plus souvent un paysage urbain tel qu'on le voit sur les exemples des figures 3a et 3b. Il s'agit d'une scène de la réalité, plus précisément la portion visible du monde réel contemplée via les moyens d'acquisition optique 12, projetée en deux dimensions lors de l'acquisition de l'image I.

La position spatiale de référence est la position de l'objectif des moyens d'acquisitions optique 12 (sous la forme d'un triplet de coordonnées) dans un référentiel de la scène S. Cette position spatiale de référence approxime celle des yeux de l'utilisateur au sein de la scène S.

On notera que par au moins une image I, on entend soit une ou plusieurs images isolées, soit une succession d'images, en d'autres termes une vidéo. Le présent procédé est en effet tout à fait adapté à un fonctionnement en continu (i.e. un enrichissement image par image du film obtenu).

Dans un cas comme dans l'autre, les écrans 13 des terminaux mobiles actuels peuvent afficher en temps réel l'image I enrichi enrichie issue du procédé, ce qui permet de se déplacer en observant via l'écran 13 la scène S que l'on verrait si l'on pouvait voir « à travers » le terminal mobile 1, mais enrichie en informations (en d'autre termes la réalité « augmentée »).

On comprendra toutefois que le procédé n'est pas limité aux terminaux mobiles. Il est par exemple tout à fait possible de filmer un plan dans une rue avec une caméra numérique (enregistré sous la forme d'une séquence vidéo numérique sur des moyens de stockage tels qu'une cassette Mini DV), puis d'enrichir a postériori cette séquence via un poste de travail au niveau duquel la séquence acquise est lue.

Par enrichissement, on entend de façon classique l'intégration dans l'image I d'au moins un objet graphique O1, O2, O3, O4, O5, O6, O7, O8, O9 (voir les figures 3a et 3b) associé à une position spatiale de la scène S.

Les objets graphiques sont des objets virtuels superposés à la réalité. Ils peuvent être de toutes sortes, mais comme l'on voit sur l'exemple de la figure 1, ils prennent le plus souvent la forme d'un panneau ou d'une bulle affichant des informations relatives à la position spatiale qu'il désigne. Par exemple, si l'enrichissement vise à signaler des magasins, chaque objet graphique peut indiquer le nom d'un magasin, ses horaires d'ouverture, un numéro de téléphone, etc. Dans un autre exemple, l'enrichissement peut viser à signaler des hotspot Wi-Fi (des points d'accès à Internet sans fil). Les objets graphiques peuvent alors représenter sous forme d'un nombre de barres ou d'une couleur la qualité du signal Wi-Fi. L'homme du métier saura enrichir de façon variée n'importe quelle image I d'une scène S avec les données de son choix. L'invention n'est limitée à aucune façon de présenter l'information.

La position spatiale à laquelle un objet graphique O1, O2, O3, O4, O5, O6, O7, O8, O9 est associé est un triplet de coordonnées de l'espace (dans le même référentiel que la position spatiale de référence) à proximité immédiate du lieu de la scène S qu'il désigne.

L'intégration est mise en oeuvre de sorte à ce que chaque objet graphique O1, O2, O3, O4, O5, O6, O7, O8, O9 coïncide dans ladite image I enrichie avec la représentation de la position spatiale de la scène S associée, l'idée étant de simuler la présence de l'objet graphique dans la scène S à la position attendue ;

Dans la figure 3a, les objets graphiques O1, O2, O3, O4, 05 désignent des magasins. Les positions spatiales associées correspondent donc à un point de l'espace situé au niveau de la devanture de chaque magasin, de façon à ce que chaque objet graphique simule une enseigne.

Dans la figure 3b, les objets graphiques O6, O7, O8, O9 désignent des appartements. Les positions spatiales associées correspondent donc à un point de l'espace situé sur la façade de chaque appartement, de façon à ce que chaque objet graphique simule une pancarte.

Cette intégration est faite par des moyens de traitement de données 11, typiquement le processeur du terminal mobile 1 via lequel l'acquisition de l'image I est faite, mais comme expliqué précédemment ce peut être un processeur de tout autre équipement informatique si le traitement est fait a postériori. Il est à noter que les moyens de traitement 11 peuvent comprendre plus d'un processeur, la puissance de calcul nécessaire au procédé pouvant par exemple être partagée entre le processeur du terminal mobile 1 et celui d'un serveur 3 (voir plus loin).

On comprendra que les mécanismes d'intégration sont connus de l'homme du métier, et que celui-ci saura les adapter à toute application souhaitée de l'enrichissement d'image. En particulier, seront discutés ultérieurement des techniques de positionnement des objets graphiques.

Ce qui fait ici la spécificité du procédé objet de l'invention est que les moyens de traitement de données 11 sont en outre configurés pour :
(a) déterminer pour chaque objet graphique O1, O2, O3, O4, O5, O6, O7, O8, O9 si la position spatiale associée est visible dans la scène S par un utilisateur desdits moyens d'acquisition optique 12 depuis ladite position spatiale de référence ;
(b) intégrer chaque objet graphique O1, O2, O3, O4, O5, O6, O7, O8, 09 dans l'image I en fonction du résultat de la détermination de visibilité.

En d'autres termes, pour chaque objet graphique, un test est effectué pour savoir si une instance de l'objet graphique dans la réalité serait visible, l'affichage de chaque objet graphique dépendant de sa visibilité.

Avantageusement, seuls les objets satisfaisant ce test sont effectivement intégrés (et affichés) dans l'image I. En d'autres termes l'intégration de chaque objet graphique O1, O2, O3, O4, O5, O6, O7, O8, O9 dans l'image est effectuée seulement si la position spatiale associée à l'objet graphique O1, O2, O3, O4, O5, O6, O7, O8, O9 est visible dans la scène S depuis ladite position spatiale de référence, les objets déterminés comme invisibles n'étant pas affichés.

En effet, les méthodes connues se contentent d'afficher l'ensemble des objets graphiques situés dans un cercle donné autour de l'utilisateur (i.e. de la position spatiale de référence). Cela entraîne l'affichage d'objets « impossibles », et le peu de lisibilité qu'on observe sur la figure 1.

Le test permet de limiter le nombre d'objets affichés et ainsi de se rapprocher de la réalité dans laquelle seule une fraction des magasins dans notre voisinage est dans notre axe de vision, la visibilité de ceux des rues voisines étant bloquée par les bâtiments environnants.

On comprendra que le procédé selon l'invention n'est pas limité à un affichage exclusif des seuls objets visibles, et qu'il est tout à fait possible de prévoir que tout ou partie des objets invisibles soient quand même représentés, par exemple en grisé ou en pointillés. De même on peut prévoir que certains objets graphiques soient systématiquement affichés, par exemple les arrêts de transport en commun, afin de pouvoir s'y rendre facilement même s'ils ne sont pas encore en vue.

### Test de visibilité

De façon préférée, l'ensemble des objets graphiques O1, O2, O3, O4, O5, O6, O7, O8, O9 « théoriquement visibles » est générée, puis le test est effectué sur chacun afin de ne garder que ceux qui le sont réellement.

Ainsi, le procédé comprend la mise en œuvre par les moyens de traitement de données 11 d'une étape préalable de génération de chaque d'objet graphique O1, O2, O3, O4, O5, O6, O7, O8, O9, chaque objet graphique généré étant intégré dans l'image I à l'étape b seulement s'il est déterminé visible, aux exceptions près citées précédemment dans lesquels les objets déterminés invisibles sont quand même représentés, mais différemment (grisés, en pointillés, etc.).

En d'autres termes, les moyens de traitement de données 11 mettent en œuvre des étapes de :
- génération d'au moins un d'objet graphique O1, O2, O3, O4, O5, O6, O7, O8, O9 « intégrable » dans l'image I ;
- détermination pour chaque objet graphique O1, O2, O3, O4, O5, O6, O7, O8, O9 généré de la visibilité ou non de la position spatiale associée dans la scène S depuis ladite position spatiale de référence ;
- intégration dans l'image I de chaque objet graphique dont la position spatiale associée est déterminée visible.

On comprendra également qu'il est possible de fonctionner dans le sens inverse, à savoir déterminer l'ensemble des positions spatiales visibles, puis générer les objets graphiques O1, O2, O3, O4, O5, O6, O7, O8, O9 associés.

Toutefois, dans l'optique d'une mise en œuvre en continu et en temps réel par un utilisateur en mouvement (dans des rues par exemple), il est préférable de générer « d'avance » tous les objets graphiques, puis les faire apparaître (ou disparaître) au gré des déplacements de l'utilisateur (et donc de la position spatiale de référence).

De façon préférée, le test de visibilité est un test d'intersection entre
- un segment ayant pour extrémités la position spatiale associée à l'objet graphique O1, O2, O3, O4, O5, O6, O7, O8, O9 et ladite position spatiale de référence (segment qui correspond à l'axe de vision de l'objet) ; et
- une modélisation tridimensionnelle de la scène S.

Connaissant les coordonnées des deux extrémités du segment et disposant des données de modélisation, il est aisé de tester en parcourant le segment d'une extrémité à l'autre. Pour chaque point on teste si ce point appartient à la modélisation tridimensionnelle de la scène. Si oui, il y a obstruction et la position spatiale associée à l'objet graphique n'est pas visible.

De telles modélisations tridimensionnelles de la réalité sont connues et disponibles (on citera par exemple MapsGL de Google) le plus souvent via le réseau Internet.

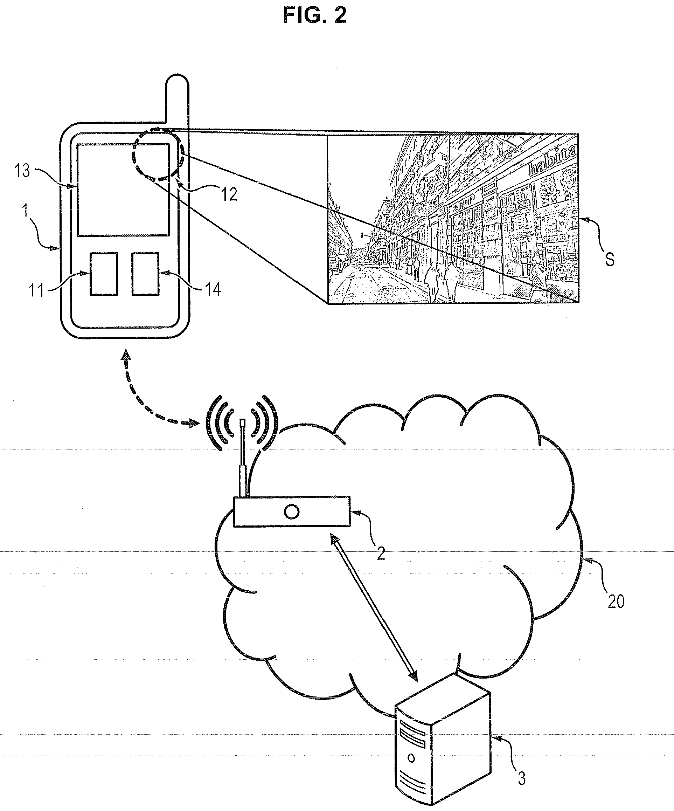

En référence à la figure 2, le terminal mobile peut être connecté à un serveur 3 via le réseau Internet 20. Pour le fonctionnement complètement libre, la connexion peut passer par un réseau sans-fil tel que le réseau 3G et des antennes 2.

La modélisation tridimensionnelle de la scène S peut être stockée sur le serveur 3. Plus précisément, une modélisation d'une zone vaste contenant la scène S est stockée sur le serveur 3. Les données relatives à la sous-partie correspondant à la seule scène S peuvent être extraites sur requête émanant des moyens de traitement 11. Alternativement, le test de visibilité est fait au niveau du serveur 3 et ce dernier renvoie le résultat (en d'autres termes, les positions extrémales du segment de « vision » sont transmises au serveur 3).

Avantageusement, le procédé comprend la mise en œuvre par des moyens de géolocalisation 14 connectés aux moyens de traitement de données 11 d'une étape préalable de localisation et d'orientation de ladite scène tridimensionnelle S. Dans le cas d'un terminal mobile 1, ces moyens de géolocalisation 14 peuvent consister par exemple en la combinaison d'un GPS et d'une boussole. Cette étape permet de déterminer quelle est la scène S observée, et le cas échéant envoyer au serveur 3 une requête des données de ladite modélisation tridimensionnelle de la scène S en fonction des données de localisation et d'orientation de ladite scène tridimensionnelle S obtenues.

Alternativement ou en complément, les moyens de traitement 11 peuvent mettre en oeuvre une analyse de l'image I pour comparaison avec des banques de données pour identification de la scène S.

Dans tous les cas on comprendra que les possibilités de mise en oeuvre du procédé sont multiples, et que l'invention n'est limitée à aucune technique en particulier en ce qui concerne le test de la visibilité de la position spatiale associée avec un objet graphique.

Il est à noter que le serveur 3 (ou un serveur distinct) peut également d'abord servir de base de données d'informations pour la génération des objets graphiques O1, O2, O3, O4, O5, O6, O7, O8, O9. Par exemple si l'on reprend l'exemple dans lequel on souhaite signaler des magasins, cette base de données peut être une liste des magasins, chacun associés à des coordonnées (qui serviront de base à la position spatiale associé à un objet graphique correspondant) et des tags tels que les horaires d'ouverture ou le numéro de téléphone du magasin.

La requête envoyée au serveur 3 peut ainsi être une requête d'informations sur les magasins à proximité de l'utilisateur (en fonction de la position de référence) afin de générer les objets graphiques O1, O2, O3, O4, O5, O6, O7, O8, O9. Toutes ces données peuvent être alternativement stockées en local dans le terminal mobile 1, voire déduites de l'image I par analyse d'image (par exemple reconnaissance de logos).

### Ajustement de la taille

Outre le test de visibilité, le procédé objet de l'invention propose une autre amélioration des procédés d'enrichissement connus afin de rendre l'image enrichie plus réaliste et d'améliorer l'expérience utilisateur

Ainsi, l'intégration de chaque objet graphique O1, O2, O3, O4, O5, O6, O7, O8, O9 dans l'image I comprend avantageusement un ajustement de la taille de l'objet graphique O1, O2, O3, O4, O5, O6, O7, O8, O9 en fonction de la position spatiale associée à l'objet graphique O1, O2, O3, O4, O5, O6, O7, O8, O9. De façon préférée, cet ajustement de taille est proportionnel à la distance entre la position spatiale associée à l'objet virtuel O1, O2, O3, O4, O5, O6, O7, O8, O9 et ladite position spatiale de référence (en d'autres termes la longueur du segment de « vision » défini précédemment).

La taille d'un objet graphique renseigne ainsi l'utilisateur sur la position du lieu à atteindre, et l'informe sur la distance à parcourir et le temps nécessaire comme le ferait une enseigne d'un magasin dans la réalité.

Comme l'on voit sur les figures 3a et 3b, l'ajustement de taille signale aussi bien une distance dans le plan (O1<O2<O3<O4<O5) que selon z (O6<O7<O8<O9).

Cela permet un affichage plus naturel que celui de la figure 1, dans lequel un ajustement de taille des objets graphiques ne dépend pas de la distance mais uniquement de l'encombrement (lorsque plusieurs objets graphiques se superposent, leur taille est réduite).

### Terminal mobile

Selon un deuxième aspect, l'invention concerne un terminal mobile pour la mise en œuvre du procédé de génération d'une image enrichie, tel que celui représenté sur la figure 2.

Ainsi, ce terminal mobile 1 comprend comme expliqué au moins des moyens d'acquisition optique 12 configurés pour acquérir au moins une image I d'une scène tridimensionnelle S depuis une position spatiale de référence de la scène S, et des moyens de traitement de données 11. Il peut être tout équipement connu tel qu'un smartphone, une tablette tactile, un PC ultraportable, etc.

Les moyens de traitement de données 11 sont donc configurés non seulement pour intégrer dans l'image I au moins un objet graphique O1, O2, O3, O4, O5, O6, O7, O8, O9 associé à une position spatiale de la scène S, mais également pour déterminer pour chaque objet graphique O1, O2, O3, O4, O5, O6, O7, O8, O9 si la position spatiale associée est visible dans la scène S par un utilisateur desdits moyens d'acquisition optique 12 depuis ladite position spatiale de référence, et intégrer chaque objet graphique O1, O2, O3, O4, O5, O6, O7, O8, O9 dans l'image I en fonction du résultat de la détermination de visibilité.

Comme expliqué, les objets invisibles peuvent être affichés différemment, ou tout simplement non intégrés dans l'image I.

En complément, le terminal mobile 1 comprend avantageusement des moyens d'affichage 13 (permettant de visualiser l'image I, avant et/ou après enrichissement), des moyens de géolocalisation 14 et des moyens de connexion 15 via à un réseau 20 au serveur 3 décrit précédemment, pour la récupération de données générales utiles à la génération des objets graphiques et/ou des données relatives à une modélisation tridimensionnelle de la scène S.

### Produit programme d'ordinateur

Selon un troisième et un quatrième aspects, l'invention concerne un produit programme d'ordinateur comprenant des instructions de code pour l'exécution (sur des moyens de traitement de donnés 11, en particulier ceux d'une terminal mobile 1) d'un procédé de génération d'une image enrichie à partir d'une image I d'une scène tridimensionnelle S acquise par des moyens d'acquisition optique 12 selon le premier aspect de l'invention, ainsi que des moyens de stockage lisibles par un équipement informatique (par exemple une mémoire de ce terminal mobile 1) sur lequel on trouve ce produit programme d'ordinateur.

## Revendications

1. Procédé mis en œuvre par ordinateur de génération d'une image enrichie à partir d'une image (I) d'une scène tridimensionnelle (S) acquise par des moyens d'acquisition optique (12) depuis une position spatiale de référence, le procédé comprenant l'intégration dans l'image (I), par des moyens de traitement de données (11), d'au moins un objet graphique (O1, O2, O3, O4, O5, O6, O7, O8, O9) associé à une position spatiale de la scène (S) ;
le procédé étant **caractérisé en ce que** les moyens de traitement de données (11) sont configurés pour :
(a) déterminer pour chaque objet graphique (O1, O2, O3, O4, O5, O6, O7, O8, O9) si la position spatiale associée est visible dans la scène (S) par un utilisateur desdits moyens d'acquisition optique (12) depuis ladite position spatiale de référence ;
(b) intégrer chaque objet graphique (O1, O2, O3, O4, O5, O6, O7, O8, 09) dans l'image (I) en fonction du résultat de la détermination de visibilité, l'intégration de chaque objet graphique (O1, O2, O3, O4, O5, O6, O7, O8, O9) dans l'image comprenant un ajustement de la taille de l'objet graphique (O1, O2, O3, O4, O5, O6, O7, O8, O9) en fonction de la position spatiale associée à l'objet graphique (O1, O2, O3, O4, O5, O6, O7, O8, O9);
la détermination de visibilité de l'étape (a) consiste pour chaque objet graphique (O1, O2, O3, O4, O5, O6, O7, O8, O9) en un test d'intersection entre
- un segment ayant pour extrémités la position spatiale associée à l'objet graphique (O1, O2, O3, O4, O5, O6, O7, O8, O9) et ladite position spatiale de référence ; et
- une modélisation tridimensionnelle de la scène (S); et
ledit ajustement de la taille de chaque objet graphique (O1, 02, 03, 04, 05, O6, O7, O8, O9) de l'étape (b) est proportionnel à la longueur du segment susmentionné.

2. Procédé selon la revendication 1, comprenant la mise en oeuvre par les moyens de traitement de données (11) d'une étape préalable de génération de chaque d'objet graphique (O1, O2, O3, O4, O5, O6, O7, O8, O9), chaque objet graphique généré étant intégré dans l'image (I) à l'étape (b) seulement s'il est déterminé visible.

3. Procédé selon l'une des revendications 1 à 2, dans lequel les moyens de traitement de données (11) sont en connexion avec un serveur (3) via un réseau (20), le serveur (3) étant apte à fournir ladite modélisation tridimensionnelle de la scène (S).

4. Procédé selon l'une des revendications précédentes, comprenant la mise en œuvre par des moyens de géolocalisation (14) connectés aux moyens de traitement de données (11) d'une étape préalable de localisation et d'orientation de ladite scène tridimensionnelle (S).

5. Procédé selon les revendications 3 et 4 en combinaison, comprenant l'envoi au serveur (3) d'une requête des données de ladite modélisation tridimensionnelle de la scène (S) en fonction des données de localisation et d'orientation de ladite scène tridimensionnelle (S) obtenues.

6. Procédé selon l'une des revendications précédentes, dans lequel les moyens de traitement de données (11) et les moyens d'acquisition optique (12) sont ceux d'un terminal mobile (1), le terminal mobile (1) comprenant en outre des moyens d'affichage (13) de ladite image (I) enrichie.

7. Terminal mobile (1) comprenant des moyens d'acquisition optique (12) configurés pour acquérir au moins une image (I) d'une scène tridimensionnelle (S) depuis une position spatiale de référence de la scène (S), et des moyens de traitement de données (11) configurés pour intégrer dans l'image (I) au moins un objet graphique (O1, O2, O3, O4, O5, O6, O7, O8, O9) associé à une position spatiale de la scène (S) ; le terminal mobile étant **caractérisé en ce que** les moyens de traitement de données (11) sont en outre configurés pour déterminer pour chaque objet graphique (O1, O2, O3, O4, O5, O6, O7, O8, O9) si la position spatiale associée est visible dans la scène (S) par un utilisateur desdits moyens d'acquisition optique (12) depuis ladite position spatiale de référence, et intégrer chaque objet graphique (O1, O2, O3, O4, O5, O6, O7, O8, O9) dans l'image (I) en fonction du résultat de la détermination de visibilité, la détermination de visibilité consiste pour chaque objet graphique (O1, O2, O3, O4, O5, O6, O7, O8, O9) en un test d'intersection entre
- un segment ayant pour extrémités la position spatiale associée à l'objet graphique (O1, O2, O3, O4, O5, O6, O7, O8, O9) et ladite position spatiale de référence ; et
- une modélisation tridimensionnelle de la scène (S); et
l'intégration de chaque objet graphique (O1, O2, O3, O4, O5, O6, O7, O8, 09) dans l'image comprenant un ajustement de la taille de l'objet graphique (O1, O2, O3, O4, O5, O6, O7, O8, O9) en fonction de la position spatiale associée à l'objet graphique (O1, O2, O3, O4, O5, O6, O7, O8, O9) ledit ajustement de la taille de chaque objet graphique (O1, O2, O3, O4, O5, O6, O7, O8, O9) est proportionnel à la longueur du segment susmentionné.

8. Terminal mobile selon la revendication 7, comprenant en outre des moyens de géolocalisation (14) et des moyens de connexion (15) via à un réseau (20) à un serveur (3) sur des moyens de stockage de données duquel sont stockées des données relatives à une modélisation tridimensionnelle de la scène (S).

9. Produit programme d'ordinateur comprenant des instructions de code pour l'exécution d'un procédé de génération d'une image enrichie à partir d'une image (I) d'une scène tridimensionnelle (S) acquise par des moyens d'acquisition optique (12) selon l'une des revendications 1 à 6.

10. Moyen de stockage lisible par un équipement informatique sur lequel un produit programme d'ordinateur comprend des instructions de code pour l'exécution d'un procédé de génération d'une image enrichie à partir d'une image (I) d'une scène tridimensionnelle (S) acquise par des moyens d'acquisition optique (12) selon l'une des revendications 1 à 6.

## Patentansprüche

1. Von einem Computer ausgeführtes Verfahren zum Erzeugen eines Bildes, das ausgehend von einem Bild (I) einer dreidimensionalen Szene (S) erweitert wird, die mit optischen Aufnahmemitteln (12) aus einer räumlichen Bezugsposition aufgenommen wurde, wobei das Verfahren das Einfügen mindestens eines grafischen Objekts (O1, O2, O3, O4, O5, O6, O7, O8, O9), das einer räumlichen Position der Szene (S) zugeordnet ist, in das Bild (I) durch Datenverarbeitungsmittel (11) umfasst;
wobei das Verfahren **dadurch gekennzeichnet ist, dass** die Datenverarbeitungsmittel (11) dazu konfiguriert sind, um:
(a) für jedes grafische Objekt (O1, O2, O3, O4, O5, O6, O7, O8, O9) zu bestimmen, ob die zugeordnete räumliche Position in der Szene (S) für einen Benutzer der optischen Aufnahmemittel (12) aus der räumlichen Bezugsposition sichtbar ist;
(b) jedes grafische Objekt (O1, O2, O3, O4, O5, O6, O7, O8, O9) in das Bild (I) in Abhängigkeit vom Ergebnis der Sichtbarkeitsbestimmung einzufügen, wobei das Einfügen jedes grafischen Objekts (O1, O2, O3, O4, O5, O6, O7, O8, O9) in das Bild ein Anpassen der Größe des grafischen Objekts (O1, O2, O3, O4, O5, O6, O7, O8, O9) in Abhängigkeit von der dem grafischen Objekt (O1, O2, O3, O4, O5, O6, O7, O8, O9) zugeordneten räumlichen Position umfasst;
die Sichtbarkeitsbestimmung des Schritts (a) für jedes grafische Objekt (O1, O2, O3, O4, O5, O6, O7, O8, O9) in einem Überschneidungstest besteht zwischen
- einem Segment, das als Endpunkte die dem grafischen Objekt zugeordnete räumliche Position (O1, O2, O3, O4, O5, O6, O7, O8, O9) und die räumliche Bezugsposition hat; und
- einer dreidimensionalen Modellierung der Szene (S);
und
die Anpassung der Größe jedes grafischen Objekts (O1, O2, O3, O4, O5, O6, O7, O8, O9) des Schritts (b) proportional zur Länge des vorgenannten Segments ist.

2. Verfahren nach Anspruch 1, umfassend die Ausführung eines vorherigen Schritts des Erzeugens jedes grafischen Objekts (O1, O2, O3, O4, O5, O6, O7, O8, O9) durch die Datenverarbeitungsmittel (11), wobei jedes erzeugte grafische Objekt im Schritt (b) nur dann in das Bild (I) eingefügt wird, wenn es als sichtbar bestimmt wurde.

3. Verfahren nach einem der Ansprüche 1 bis 2, wobei die Datenverarbeitungsmittel (11) mit einem Server (3) über ein Netzwerk (20) verbunden sind, wobei der Server (3) geeignet ist, die dreidimensionale Modellierung der Szene (S) bereitzustellen.

4. Verfahren nach einem der vorhergehenden Ansprüche, umfassend die Ausführung eines vorherigen Schritts zur Lokalisierung und Ausrichtung der dreidimensionalen Szene (S) durch Geolokalisierungsmittel (14), die mit den Datenverarbeitungsmitteln (11) verbunden sind.

5. Verfahren nach den Ansprüchen 3 und 4 in Kombination, umfassend das Senden einer Anforderung der Daten der dreidimensionalen Modellierung der Szene (S) an den Server (3) in Abhängigkeit von den erhaltenen Lokalisierungs- und Ausrichtungsdaten der dreidimensionalen Szene (S).

6. Verfahren nach einem der vorhergehenden Ansprüche, wobei die Datenverarbeitungsmittel (11) und die optischen Aufnahmemittel (12) diejenigen eines mobilen Endgeräts (1) sind, wobei das mobile Endgerät (1) ferner Mittel zum Anzeigen (13) des erweiterten Bildes (I) umfasst.

7. Mobiles Endgerät (1), umfassend optische Aufnahmemittel (12), die dazu konfiguriert sind, mindestens ein Bild (I) einer dreidimensionalen Szene (S) aus einer räumlichen Bezugsposition der Szene (S) aufzunehmen, und Datenverarbeitungsmittel (11), die dazu konfiguriert sind, in das Bild (I) mindestens ein grafisches Objekt (O1, O2, O3, O4, O5, O6, O7, O8, O9), das einer räumlichen Position der Szene (S) zugeordnet ist, einzufügen;
wobei das mobile Endgerät **dadurch gekennzeichnet ist, dass** die Datenverarbeitungsmittel (11) ferner dazu konfiguriert sind, für jedes grafische Objekt (O1, O2, O3, O4, O5, O6, O7, O8, O9) zu bestimmen, ob die zugeordnete räumliche Position in der Szene (S) für einen Benutzer der optischen Aufnahmemittel (12) aus der räumlichen Bezugsposition sichtbar ist, und jedes grafische Objekt (O1, O2, O3, O4, O5, O6, O7, O8, O9) in Abhängigkeit vom Ergebnis der Sichtbarkeitsbestimmung in das Bild (I) einzufügen,
die Sichtbarkeitsbestimmung für jedes grafische Objekt (O1, O2, O3, O4, O5, O6, O7, O8, O9) in einem Überschneidungstest besteht zwischen
- einem Segment, das als Endpunkte die dem grafischen Objekt zugeordnete räumliche Position (O1, O2, O3, O4, O5, O6, O7, O8, O9) und die räumliche Bezugsposition hat; und
- einer dreidimensionalen Modellierung der Szene (S);
und
das Einfügen jedes grafischen Objekts (O1, O2, O3, O4, O5, O6, O7, O8, O9) in das Bild ein Anpassen der Größe des grafischen Objekts (O1, O2, O3, O4, O5, O6, O7, O8, O9) in Abhängigkeit von der dem grafischen Objekt (O1, O2, O3, O4, O5, O6, O7, O8, O9) zugeordneten räumlichen Position umfasst;
die Anpassung der Größe jedes grafischen Objekts (O1, O2, O3, O4, O5, O6, O7, O8, O9) proportional zur Länge des vorgenannten Segments ist.

8. Mobiles Endgerät nach Anspruch 7, umfassend ferner Geolokalisierungsmittel (14) und Mittel zum Verbinden (15) über ein Netzwerk (20) mit einem Server (3), auf dessen Datenspeichermitteln Daten bezüglich einer dreidimensionalen Modellierung der Szene (S) gespeichert sind.

9. Computerprogrammprodukt, umfassend Codeanweisungen zum Ausführen eines Verfahrens zum Erzeugen eines Bildes, das ausgehend von einem mit optischen Aufnahmemitteln (12) aufgenommenen Bild (I) einer dreidimensionalen Szene (S) erweitert wurde, nach einem der Ansprüche 1 bis 6.

10. Computerlesbares Speichermedium, auf dem ein Computerprogrammprodukt Codeanweisungen zum Ausführen eines Verfahrens zum Erzeugen eines Bildes, das ausgehend von einem mit optischen Aufnahmemitteln (12) aufgenommenen Bild (I) einer dreidimensionalen Szene (S) erweitert wurde, nach einem der Ansprüche 1 bis 6 umfasst.

## Claims

1. Method implemented by computer for generating an enriched image from an image (I) of a three-dimensional scene (S) acquired by optical acquisition means (12) from a reference spatial position, the method comprising the integration in the image (I), by data processing means (11), of at least one graphic object (O1, O2, O3, O4, O5, O6, O7, O8, O9) associated with a spatial position of the scene (S);
the method being **characterized in that** the data processing means (11) are configured to:
(a) determine, for each graphic object (O1, O2, O3, O4, O5, O6, O7, O8, O9), whether the associated spatial position is visible in the scene (S) by a user of said optical acquisition means (12) from said reference spatial position;
(b) integrate each graphic object (O1, O2, O3, O4, O5, O6, O7, O8, O9) in the image (I) as a function of the result of the determination of visibility, the integration of each graphic object (O1, O2, O3, O4, O5, O6, O7, O8, O9) in the image comprising an adjustment of the size of the graphic object (O1, O2, O3, O4, O5, O6, O7, O8, O9) as a function of the spatial position associated with the graphic object (O1, O2, O3, O4, O5, O6, O7, O8, O9);
the determination of visibility of the step (a) consists, for each graphic object (O1, O2, O3, O4, O5, O6, O7, O8, O9), of a test of intersection between
- a segment whose ends are the spatial position associated with the graphic object (O1, O2, O3, O4, O5, O6, O7, O8, O9) and said reference spatial position; and
- a three-dimensional modelling of the scene (S); and said adjustment of the size of each graphic object (O1, O2, O3, O4, O5, O6, O7, O8, O9) of the step (b) is proportional to the length of the abovementioned segment.

2. Method according to Claim 1, comprising the implementation by the data processing means (11) of a preliminary step of generation of each graphic object (O1, O2, O3, O4, O5, O6, O7, O8, O9), each graphic object generated being integrated in the image (I) in the step (b) only if it is determined to be visible.

3. Method according to one of Claims 1 and 2, in which the data processing means (11) are connected with a server (3) via a network (20), the server (3) being capable of providing said three-dimensional modelling of the scene (S).

4. Method according to one of the preceding claims, comprising the implementation by geolocation means (14) connected to the data processing means (11) of a preliminary step of location and orientation of said three-dimensional scene (S).

5. Method according to Claims 3 and 4 in combination, comprising the sending to the server (3) of a request for the data of said three-dimensional modelling of the scene (S) as a function of the location and orientation data of said three-dimensional scene (S) obtained.

6. Method according to one of the preceding claims, in which the data processing means (11) and the optical acquisition means (12) are those of a mobile terminal (1), the mobile terminal (1) also comprising means for displaying (13) said enriched image (I).

7. Mobile terminal (1) comprising optical acquisition means (12) configured to acquire at least one image (I) of a three-dimensional scene (S) from a reference spatial position of the scene (S), and data processing means (11) configured to integrate in the image (I) at least one graphic object (O1, O2, O3, O4, O5, O6, O7, O8, O9) associated with a spatial position of the scene (S);
the mobile terminal being **characterized in that** the data processing means (11) are also configured to determine, for each graphic object (O1, O2, O3, O4, O5, O6, O7, O8, O9), whether the associated spatial position is visible in the scene (S) by a user of said optical acquisition means (12) from said reference spatial position, and integrate each graphic object (O1, O2, O3, O4, O5, O6, O7, O8, O9) in the image (I) as a function of the result of the determination of visibility,
the determination of visibility consists, for each graphic object (O1, O2, O3, O4, O5, O6, O7, O8, O9), in a test of intersection between
- a segment whose ends are the spatial position associated with the graphic object (O1, O2, O3, O4, O5, O6, O7, O8, O9) and said reference spatial position; and
- a three-dimensional modelling of the scene (S); and the integration of each graphic object (O1, O2, O3, O4, O5, O6, O7, O8, O9) in the image comprising an adjustment of the size of the graphic object (O1, O2, O3, O4, O5, O6, O7, O8, O9) as a function of the spatial position associated with the graphic object (O1, O2, O3, O4, O5, O6, O7, O8, O9);
said adjustment of the size of each graphic object (O1, O2, O3, O4, O5, O6, O7, O8, O9) is proportional to the length of the abovementioned segment.

8. Mobile terminal according to Claim 7, also comprising geolocation means (14) and means of connection (15) via a network (20) to a server (3) on data storage means of which are stored data relating to a three-dimensional modelling of the scene (S).

9. Computer programme product comprising code instructions for executing a method for generating an enriched image from an image (I) of a three-dimensional scene (S) acquired by optical acquisition means (12) according to one of Claims 1 to 6.

10. Storage means that can be read by a computing device on which a computer programme product comprises code instructions for executing a method for generating an enriched image from an image (I) of a three-dimensional scene (S) acquired by optical acquisition means (12) according to one of Claims 1 to 6.
